(19) Europäisches Patentamt
European Patent Office
Office européen des brevets

(11) **EP 3 356 453 B1**

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(21) Anmeldenummer: **16775199.9**

(22) Anmeldetag: **28.09.2016**

(51) Int Cl.:
*C08J 9/00* *(2006.01)*     *C08J 9/08* *(2006.01)*
*C08K 5/092* *(2006.01)*     *C08K 5/21* *(2006.01)*
*C08K 5/14* *(2006.01)*     *C08L 23/08* *(2006.01)*
*C08L 31/04* *(2006.01)*     *B29C 44/18* *(2006.01)*
*B62D 29/00* *(2006.01)*

(86) Internationale Anmeldenummer:
**PCT/EP2016/073065**

(87) Internationale Veröffentlichungsnummer:
**WO 2017/055329 (06.04.2017 Gazette 2017/14)**

(54) **THERMISCH EXPANDIERBARE ZUSAMMENSETZUNGEN MIT HARNSTOFF-DERIVATEN**

THERMALLY EXPANDABLE COMPOSITIONS CONTAINING UREA DERIVATIVES

COMPOSITIONS EXPANSIBLES THERMIQUEMENT COMPRENANT DES DÉRIVÉS D'URÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2015 EP 15187182**

(43) Veröffentlichungstag der Anmeldung:
**08.08.2018 Patentblatt 2018/32**

(73) Patentinhaber: **Henkel AG & Co. KGaA**
**40589 Düsseldorf (DE)**

(72) Erfinder:
• **KOHLSTRUNG, Rainer**
**68723 Plankstadt (DE)**
• **RAPPMANN, Klaus**
**69469 Weinheim-Rittenweier (DE)**
• **PÖLLER, Sascha**
**44892 Bochum (DE)**

(56) Entgegenhaltungen:
**WO-A1-2008/034755     WO-A1-2015/140282**

**Beschreibung**

Die vorliegende Anmeldung betrifft eine thermisch expandierbare Zusammensetzung, die mindestens ein peroxidisch vernetzendes Polymer, mindestens ein Peroxid und mindestens ein endothermes chemisches Treibmittel enthält, Formkörper, die diese Zusammensetzung enthalten, sowie ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung derartiger Formkörper.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall sowie Strukturschall in derartigen Hohlräumen zu vermeiden und somit unangenehme Fahrzeuglauf- und Windgeräusche zu mindern und somit den Fahrkomfort im Fahrzeug zu steigern.

Schottteile, die eine abdichtende und/oder akustische Wirkung in derartigen Hohlräumen bewirken, werden häufig als "Hohlraumabschottungen", "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zusammensetzungen enthalten. Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

In modernen Fahrzeugen werden ferner immer häufiger metallische und/oder kunststoffbasierte Leichtbauteile für eine konstant maßhaltige Serienfertigung mit vorgegebener Steifigkeit und Strukturfestigkeit benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen. Auch hier kommen Formkörper aus thermisch expandierbaren Zusammensetzungen, die die nötigen Stützeigenschaften verleihen zum Einsatz.

Entsprechende thermisch expandierbare Zusammensetzung werden zum Beispiel in den Schriften WO 2008/034755, WO 2007/039309, WO 2013/017536, WO 2015/140282 und der deutschen Anmeldung 10 2012 221 192.6 beschrieben. Diese thermisch expandierbaren Zusammensetzungen finden auch Einsatz im Automobilbereich.

In derartigen expandierbaren Zusammensetzungen, wie beispielsweise Kautschuk-Vulkanisaten (Schwefel, Peroxid oder Benzochinondioxim) zur Abdichtung und Verklebung, Ethylenvinylacetatbasierten Hohlraumabschottungen, Epoxid-basierten Stützschäumen und expandierbaren Versiegelungsmassen im Automobilbau, werden heutzutage exotherme Treibmittel, wie beispielsweise ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid), 5-PT (5-Phenyltetrazol) und ähnliche, verwendet.

Diese Treibmittel haben den Nachteil, dass sie eine respiratorische Sensitivierung auslösen können, aus toxikologischer Sicht generell bedenklich sind, oder explosiv sind. Darüber hinaus entstehen bei ihrem Zerfall Nebenprodukte wie Ammoniak, Formamid, Formaldehyd oder Nitrosamine, die gemäß der Global Automotive Declarable Substance List (GADSL), IFA-KMR-List 08/2012 oder dem BGIA-Bericht "Index of hazardous substances 2012" im Automobilbau verboten sind. Zusätzlich ist bei der Verwendung von exothermen Treibmitteln der VOC-Gehalt (Gehalt flüchtiger organischer Verbindungen) sehr hoch.

Ferner hängt aufgrund des exothermen Zerfalls und des engen Temperaturbereichs der Zerfallstemperatur der obigen Treibmittel die Schaumstruktur von der Härtungs-/Schäumtemperaturen ab, die üblicherweise im Bereich 140-220°C liegen, und kann je nach Temperaturbereich sehr stark variieren. Dadurch schwanken die Expansionsrate und die Schaumstruktur zwischen den minimalen und maximalen Prozesstemperaturen. Die Schaumstruktur beeinflusst wiederum die Absorption von Wasser bei unterschiedlichen Härtungstemperaturen, die gerade bei grobporigen Schäumen sehr hoch sein kann. Bei Temperaturen unterhalb von 140°C können die genannten Treibmittel nicht effektiv verwendet werden.

Hinsichtlich der Wasserabsorption ist es vor allem beim Einsatz im Automobilbereich sehr wichtig, dass die Wasserabsorption möglichst gering gehalten wird. Aufgrund der besseren Korrosionsbeständigkeit und Langzeithaltbarkeit wird im Automobilbereich eine geringe Wasserabsorption gefordert. Der Austausch von exothermen Treibmitteln gegen endotherme Treibmittel kann aber zu einer Erhöhung der Wasserabsorption führen.

Aufgabe der vorliegenden Erfindung war es daher, thermisch expandierbare Massen zur Verfügung zu stellen, die ohne die genannten exothermen Treibmittel auskommen können aber in gleicher Weise wie die bekannten Massen für die oben beschriebenen Verwendungen geeignet sind und vor allem eine geringe Wasserabsorption aufweisen.

Diese Aufgabe wird überraschender Weise durch thermisch expandierbare Zusammensetzungen gelöst, die

  a) mindestens ein peroxidisch vernetzendes Polymer,
  b) mindestens ein Peroxid und
  c) mindestens ein endothermes chemisches Treibmittel enthalten,

wobei das mindestens eine endotherme chemische Treibmittel mindestens eine feste, optional funktionalisierte, Polycarbonsäure oder deren Salz ausgewählt aus festen, organischen Hydroxy-funktionalisierten oder ungesättigten Di-, Tri-, Tetra- oder Polycarbonsäuren oder deren Salzen und mindestens ein Harnstoffderivat der Formel (I)

$$R_1\text{-}NH\text{-}C(=X)\text{-}NR_2R_3 \qquad (I)$$

umfasst, wobei X für O oder S steht, und wobei $R_1$, $R_2$ und $R_3$ unabhängig für H, substituiertes oder unsubstituiertes Alkyl, substituiertes oder unsubstituiertes Heteroalkyl, substituiertes oder unsubstituiertes Cycloalkyl, substituiertes oder unsubstituiertes Aryl oder -C(O)-$R_4$ stehen, wobei $R_4$ für H, substituiertes oder unsubstituiertes Alkyl steht.

Entsprechende Zusammensetzungen überwinden die bekannten Nachteile und erfüllen gleichzeitig die an derartige thermisch expandierbare Zusammensetzungen gestellten Anforderungen in einem hohen Maße, vor allem in Hinblick auf eine hervorragende Expansion und eine geringe Wasseraufnahme.

Ein erster Gegenstand der vorliegenden Erfindung sind daher thermisch expandierbare Zusammensetzungen, enthaltend

  a) mindestens ein peroxidisch vernetzendes Polymer,
  b) mindestens ein Peroxid und
  c) mindestens ein endothermes chemisches Treibmittel,

dadurch gekennzeichnet, dass das mindestens eine endotherme chemische Treibmittel mindestens eine feste, optional funktionalisierte, Polycarbonsäure oder deren Salz ausgewählt aus festen, organischen Hydroxy-funktionalisierten oder ungesättigten Di-, Tri-, Tetra- oder Polycarbonsäuren oder deren Salzen und mindestens ein Harnstoffderivat der Formel (I)

$$R_1\text{-}NH\text{-}C(=X)\text{-}NR_2R_3 \qquad (I)$$

umfasst, wobei X für O oder S steht, und wobei $R_1$, $R_2$ und $R_3$ unabhängig für H, substituiertes oder unsubstituiertes Alkyl, substituiertes oder unsubstituiertes Heteroalkyl, substituiertes oder unsubstituiertes Cycloalkyl, substituiertes oder unsubstituiertes Aryl oder -C(O)-$R_4$ stehen, wobei $R_4$ für H, substituiertes oder unsubstituiertes Alkyl steht.

Endotherme chemische Treibmittel haben den Vorteil, dass sie weder gesundheitsschädlich noch explosiv sind und bei der Expansion geringere Mengen an flüchtigen organischen Verbindungen (VOC) entstehen. Die Zersetzungsprodukte sind im wesentlichen $CO_2$ und Wasser. Ferner haben die damit hergestellten Produkte eine gleichmäßigere Schaumstruktur über den gesamten Prozesstemperaturbereich, der für die Härtung genutzt wird. Dadurch ergibt sich im vorliegenden Fall in Kombination mit den anderen Komponenten der Zusammensetzung auch eine besonders geringere Wasserabsorption. Schließlich ist die Zersetzungstemperatur der endothermen Treibmittel, insbesondere von Mischungen davon, im Vergleich zu konventionellen exothermen Triebmitteln geringer und daher können Prozesstemperatur verringert und Energie gespart werden.

Unter einem chemischen Treibmittel werden erfindungsgemäß Verbindungen verstanden, die sich bei Einwirkung von Wärme zersetzen und dabei Gase freisetzen.

Geeignete Polycarbonsäuren sind feste, organische Hydroxy-funktionalisierte oder ungesättigte Di-, Tri-, Tetra- oder Polycarbonsäuren, wie beispielsweise Citronensäure, Weinsäure, Äpfelsäure, Fumarsäure und Maleinsäure. Besonders bevorzugt ist die Verwendung von Citronensäure. Citronensäure ist unter anderem deshalb vorteilhaft, da es ein ökologisch nachhaltiges Treibmittel darstellt.

Die Polycarbonsäuren können auch partiell verestert sein, wobei allerdings immer mindestens eine freie Säure-Gruppe pro Molekül enthalten bleibt. Bevorzugt sind die Polycarbonsäuren mit aliphatischen Alkoholen verestert, wie Methanol, Ethanol, Propanol und Butanol. Vorzugsweise sind die Polycarbonsäuren nicht verestert.

Ebenfalls geeignet sind die Salze der genannten Säuren sowie Mischungen von zwei oder mehr der beschriebenen Verbindungen. Bei Salzen der Polycarbonsäuren wird das Gegenion bevorzugt ausgewählt aus $Na^+$, $K^+$, $NH_4^+$, ½ $Zn^{2+}$, ½ $Mg^{2+}$, ½ $Ca^{2+}$ und deren Mischungen wobei $Na^+$ und $K^+$, insbesondere $Na^+$ bevorzugt ist.

Für die hierin beschriebenen Anwendungen ist es üblicherweise vorteilhaft die Zersetzungstemperaturen der vorstehend genannten Polycarbonsäuren abzusenken. Das wird üblicherweise durch die Verwendung von Natrium-, Kalium- oder Ammoniumbicarbonaten erreicht. Diese haben aber den Nachteil, dass nach dem Schäumen anorganische Salze in dem Schaum verbleiben, die gut wasserlöslich sind und die Wasseraufnahme in ungewollter Art und Weise erhöhen.

Die Erfinder haben nun überraschenderweise gefunden, dass sich die bisher verwendeten Carbonate durch Harnstoffderivate, wie hierin beschrieben, ersetzen lassen und dadurch die vorstehend beschriebenen Nachteile überwunden werden können. Insbesondere haben die Erfinder gefunden, dass sich durch die Verwendung der beschriebenen Harnstoffderivate die Zersetzungstemperaturen der Polycarbonsäuren um bis zu 40°C absenken lassen und dabei gleichzeitig die Zersetzungsgeschwindigkeit erhöht werden kann. So lassen sich geschäumte Zusammensetzungen erhalten, die sich durch eine feine, homogene Porenstruktur auszeichnen und gleichzeitig sehr geringe Wasserabsorption zeigen.

Die hierin verwendeten Harnstoffderivate sind solche der Formel (I)

$$R_1\text{-NH-C(=X)-NR}_2R_3 \qquad (I),$$

wobei X für O oder S steht, und wobei $R_1$, $R_2$ und $R_3$ unabhängig für H, substituiertes oder unsubstituiertes Alkyl, substituiertes oder unsubstituiertes Heteroalkyl, substituiertes oder unsubstituiertes Cycloalkyl, substituiertes oder unsubstituiertes Aryl oder -C(O)-$R_4$ stehen, wobei $R_4$ für H, substituiertes oder unsubstituiertes Alkyl steht.

"Substituiert", wie im Zusammenhang mit den Alkyl- oder Heteroalkylresten, für welche $R_1$, $R_2$, $R_3$ und $R_4$ stehen können, hierin verwendet, bedeutet, dass die entsprechende Gruppe mit einem oder mehreren Substituenten ausgewählt aus der Gruppe bestehend aus -OR', -COOR', -NR'R", - C(=X)NR'R", -NR"C(=X)NR'R", Halogen, unsubstituiertem $C_{6-14}$ Aryl, unsubstituiertem $C_{2-14}$ Heteroaryl enthaltend 1 bis 5 Heteroatome ausgewählt aus O, N und S, unsubstituiertem $C_{3-10}$ Cycloalkyl und unsubstituiertem $C_{2-10}$ Heteroalicyclyl enthaltend 1 bis 5 Heteroatome ausgewählt aus O, N und S substituiert ist.

"Substituiert", wie im Zusammenhang mit den Aryl- und Cycloalkylresten, für welche $R_1$, $R_2$ und $R_3$ stehen können, hierin verwendet, bedeutet, dass die entsprechende Gruppe mit einem oder mehreren Substituenten ausgewählt aus der Gruppe bestehend aus -OR', -COOR', -NR'R", -C(=X)NR'R", -NR"C(=X)NR'R", Halogen, unsubstituiertem $C_{1-10}$ Alkyl und -CH$_2$-Aryl substituiert sein kann, wobei die Arylgruppe in der -CH$_2$-Aryl-Gruppe wiederum mit -OR', -COOR', -NR'R", -C(=X)NR'R", -NR"C(=X)NR'R", Halogen und unsubstituiertem $C_{1-10}$ Alkyl substituiert sein kann.

R' und R" sind dabei unabhängig voneinander ausgewählt aus H, unsubstituiertem $C_{1-10}$ Alkyl, unsubstituiertem $C_{6-14}$ Aryl, unsubstituiertem $C_{2-14}$ Heteroaryl, unsubstituiertem $C_{3-10}$ Cycloalkyl, unsubstituiertem $C_{2-10}$ Heteroalicyclyl, Alkylaryl, Arylalkyl, Heteroarylalkyl und Alkylheteroaryl.

"Alkyl", wie hierin verwendet, bezieht sich auf lineare oder verzweigte Alkylgruppen, wie beispielsweise Methyl, Ethyl, n-Propyl, iso-Propyl, n-Butyl, n-Pentyl, n-Hexyl, n-Heptyl, n-Octyl, n-Nonyl, n-Decyl, n-Undecyl und n-Dodecyl sowie die linearen $C_{14}$, $C_{16}$ und $C_{18}$ Alkylreste. In verschiedenen Ausführungsformen sind die Alkylreste kurzkettige $C_{1-4}$ Alkylreste, insbesondere unsubstituierte, lineare $C_{1-4}$ Alkylreste. Die Alkylreste können substituiert oder unsubstituiert sein, sind aber vorzugsweise unsubstituiert. Wenn sie substituiert sind, werden die Substituenten insbesondere ausgewählt aus der oben beschriebenen Gruppe von Substituenten.

"Heteroalkyl", wie hierin verwendet, bezieht sich auf Alkylreste wie oben definiert, in denen mindestens ein Kohlenstoffatom durch ein Heteroatom ersetzt ist, insbesondere N oder O, besonders bevorzugt O.

"Aryl", wie hierin verwendet, bezieht sich auf aromatische Gruppen, die mindestens einen aromatischen Ring, aber auch mehrere kondensierte Ringe aufweisen können, wie beispielsweise Phenyl, Naphthyl, Anthracenyl und dergleichen. Die Arylreste können substituiert oder unsubstituiert sein. Wenn sie substituiert sind, werden die Substituenten ausgewählt aus der oben beschriebenen Gruppe.

"Heteroaryl", wie hierin verwendet, bezieht sich auf Arylreste wie oben definiert, in denen mindestens ein Kohlenstoffatom durch ein Heteroatom ersetzt ist, insbesondere N, S oder O, besonders bevorzugt O.

"Halogen", wie hierin verwendet, bezieht sich auf Fluor, Chlor, Brom und Iod.

"Cycloalkyl", wie hierin verwendet, bezieht sich auf nicht-aromatische, cyclische Kohlenwasserstoffe, insbesondere cyclische Alkyl- oder Alkenylreste wie oben definiert, z.B. Cyclopentyl-, Cyclohexyl- und Cyclohexenyl-Reste. Wenn sie substituiert sind, werden die Substituenten ausgewählt aus der oben beschriebenen Gruppe.

"Heteroalicyclyl", wie hierin verwendet, bezieht sich auf Cycloalkylreste wie oben definiert, in denen mindestens ein Kohlenstoffatom durch ein Heteroatom ersetzt ist, insbesondere N, S oder O, besonders bevorzugt O.

In verschiedenen Ausführungsformen der Erfindung steht X für O.

In verschiedenen Ausführungsformen der Erfindung werden $R_2$ und $R_3$ ausgewählt aus H und unsubstituierten Alkylresten, insbesondere $C_{1-4}$ Alkylresten, wie beispielsweise Methyl oder Ethyl. In verschiedenen Ausführungsformen der Erfindung sind $R_2$ und $R_3$ nicht H, sondern insbesondere $C_{1-4}$ Alkylreste. In anderen Ausführungsformen ist einer von $R_2$ und $R_3$ H und der andere ist ein $C_{1-4}$ Alkylrest.

In verschiedenen Ausführungsformen der Erfindung wird $R_1$ ausgewählt aus H und unsubstituierten Alkylresten, insbesondere $C_{1-4}$ Alkyresten, wie beispielsweise Methyl oder Ethyl. In verschiedenen anderen Ausführungsformen wird $R_1$ ausgewählt aus substituierten oder unsubstituierten Arylresten, insbesondere substituierten oder unsubstituierten Phenylresten. Wenn substituiert, sind die Phenylreste vorzugsweise substituiert mit Halogen, -OR', insbesondere -OH oder -O-(C$_{1-4}$) Alkyl, unsubstituiertem C$_{1-10}$ Alkyl, oder CH$_2$-Aryl, insbesondere CH$_2$-Phenyl, wobei der Phenylrest substituiert sein kann und wenn er substituiert ist, vorzugsweise substituiert ist mit -NR"C(=X)NR'R". In verschiedenen Ausführungsformen ist R$_1$ derart ausgewählt, dass sich ein Bisharnstoffderivat der Formel (II) ergibt

$$H_2C(\text{-Phenyl-NH-C(=X)-}NR_2R_3)_2 \qquad\qquad (II)$$

Wobei X, R$_2$ und R$_3$ wie oben definiert sind. Vorzugsweise sind in solchen Verbindungen alle R$_2$ identisch und alle R$_3$ identisch.

Beispielhafte Verbindungen der Formel (I) die erfindungsgemäß eingesetzt werden können schließen ein, sind aber nicht beschränkt auf: Harnstoff (reiner Harnstoff ohne Substituenten), N,N-Dimethyl urea, N,N-Diethyl urea, N,N'-Dimethyl urea, N,N'-Diethyl urea, 4-Chlorophenyl-N,N-dimethyl urea, 4,4'-Methylen-bis-(phenyldimethyl urea), 1,1-Dimethyl-3-(3,4-dichlorophenyl)urea, Isophorone bis(dimethyl urea), 1,1-Dimethyl-3-phenyl urea, 1,1-Dimethyl-3-(4-ethoxyphenyl)urea, 1,1'-(4-Phenylene)-bis-(3,3-dimethyl urea), 1,1-Dimethyl-3-(2-hydroxyphenyl)urea und 1,1-Dimethyl-3-(3-chloro-4-methylphenyl)urea. Besonders bevorzugt sind Harnstoff, N,N-Dimethyl urea, N,N-Diethyl urea, N,N'-Dimethyl urea und N,N'-Diethyl urea.

Besonders bevorzugte Treibmittel sind Mischungen von Zitronensäure/Citrat mit den vorstehend beschriebenen Harnstoffderivaten.

Die Treibmittel können ferner weitere Zusatzstoffe enthalten, wie insbesondere Calciumoxid, Zeolithe, Zinkoxid und/oder Magnesiumoxid. Auch wenn zusätzlich Carbonate eingesetzt werden können, sind die Treibmittel bzw. die Zusammensetzungen vorzugsweise im Wesentlichen frei von Hydrogencarbonaten und Carbonaten. Unter dem Begriff "im Wesentlichen frei von" wird erfindungsgemäß verstanden, wenn die Zusammensetzungen weniger als 1 Gew.-%, vorzugsweise weniger als 0,1 Gew.-%, ganz besonders bevorzugt weniger als 0,01 Gew.-% der jeweiligen Substanz, insbesondere nicht die jeweilige Substanz enthalten.

In verschiedenen Ausführungsformen enthalten die thermisch expandierbaren Zusammensetzungen das Treibmittel in einer Menge von 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% bezogen auf die Gesamtzusammensetzung. Dabei beziehen sich die Gew.-%, soweit nicht anders beschreiben, auf die Gesamtzusammensetzung vor der Expansion.

In einer bevorzugten Ausführungsform enthalten die Zusammensetzungen 0,02 bis 6 Gew.-%, bevorzugt 0,02 bis 2 Gew.-%, noch bevorzugter 0,1 bis 1,5 Gew.-% des Harnstoffderivats der Formel (I) und 5 bis 35 Gew.-%, bevorzugt 10 bis 25 Gew.-%, ganz bevorzugt 15 bis 22 Gew.-% der Polycarbonsäure, bevorzugt Zitronensäure. Dabei beziehen sich die Gew.-%, soweit nicht anders beschrieben, auf die Gesamtzusammensetzung vor der Expansion. Bevorzugt ist das Gewichtsverhältnis von Harnstoffderivat zur Polycarbonsäure von 0,1:1 bis 0,1:20, bevorzugt von 0,1:2 bis 0,1:10.

In einer besonders bevorzugten Ausführungsform wird das Treibmittel als "Masterbatch" in die thermisch expandierbare Zusammensetzung eingebracht. Unter dem Masterbatch versteht man eine Vormischung des zu verwendenden Treibmittels z.B. mit einem Polymer, vorzugsweise dem eingesetzten Polymer a). Neben den prozessualen Vorteilen hat diese Vorgehensweise den Vorteil, dass das Treibmittel besonders homogen und schonend verteilt werden kann und dabei weniger Hitze durch das Kneten/Mischen entsteht. Das Treibmittel kann so vor einer ungewollten Zersetzung geschützt werden. Besonders bevorzugt ist ein Masterbatch, welches das mindestens eine endotherme Treibmittel, bevorzugt das Harnstoffderivat und Zitronensäure, und mindestens einen Teil des peroxidisch vernetzbaren Polymers a) enthält. Daneben kann der Masterbatch auch weitere Komponenten, insbesondere Füllstoffe, enthalten, wie weitere Polymere, Talkum, Farbstoffe und/oder Antioxidantien.

Die thermisch expandierbaren Zubereitungen sind bevorzugt im Wesentlichen frei von ADCA (Azodicarbonamid) und/oder OBSH (4,4'-Oxybis(benzolsulfonylhydrazid)), insbesondere von exothermen Treibmitteln.

Neben dem endothermen Treibmittel enthält die thermisch expandierbare Zusammensetzung als Bindemittelsystem mindestens ein peroxidisch vernetzbares Polymer a).

Als peroxidisch vernetzbare Polymere kommen prinzipiell alle thermoplastischen Polymere und thermoplastischen Elastomere in Frage, die sich peroxidisch vernetzen lassen. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

In einer bevorzugten Ausführungsform ist das mindestens eine peroxidisch vernetzbare Polymer a) ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymere, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexylacrylat-Copolymeren, Ethylen-Acrylester-Copolymeren und Polyolefinen, wie beispielsweise Polyethylen oder Polypropylen.

Unter einem funktionalisierten Copolymeren wird dabei erfindungsgemäß ein Copolymer verstanden, das mit zusätzlichen Hydroxidgruppen, Amingruppen, Carboxygruppen, Anhydridgruppen und/oder Acrylatgruppen versehen ist.

Besonders vorteilhaft im Sinne der vorliegenden Erfindung sind Ethylen-Vinylacetat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere. Ganz besonders bevorzugt sind Ethylen-Vinylacetat-Copolymere und funktionalisierte Ethylen-Vinylacetat-Copolymere, insbesondere Ethylen-Vinylacetat-Copolymere, die keine weiteren Monomereinheiten einpolymerisiert enthalten (reine Ethylen-Vinylacetat-Copolymere).

Thermisch expandierbare Zubereitungen, die mindestens ein Ethylen-Vinylacetat-Copolymer mit einem Vinylacetatanteil von 5 bis 30 Gew.-%, insbesondere von 10 bis 25 Gew.-%, ganz besonders von 15 bis 20 Gew.-%, bezogen auf die Gesamtmasse der Copolymere, enthalten, sind erfindungsgemäß besonders bevorzugt.

Weiterhin hat es sich als vorteilhaft erwiesen, wenn die thermisch expandierbare Zubereitung ein peroxidisch vernetzbares Polymer a), insbesondere ein Ethylen-Vinylacetat-Copolymer, mit einem Schmelzindex von 0,3 bis 400 g/10min, insbesondere von 0,5 bis 45 g/10min, enthält. Peroxidisch vernetzbare Polymere a), insbesondere Ethylen-Vinylacetat-Copolymere, mit einem Schmelzindex von 1,5 bis 25 g/10min, insbesondere von 2 bis 10 g/10 min, ganz besonders von 2 bis 8 g/10min sind besonders vorteilhaft. Es kann erfindungsgemäß vorteilhaft sein, wenn zwei oder mehrere Polymere mit verschiedenen Schmelzindices in den thermisch expandierbaren Zubereitungen eingesetzt werden.

Der Schmelzindex wird hierfür in einem Kapillarrheometer bestimmt, wobei das Polymer bei 190°C in einem beheizbaren Zylinder aufgeschmolzen und unter einem durch die Auflagelast (2,16kg) entstehenden Druck durch eine definierte Düse (Kapillare) gedrückt wird (ASTM D1238). Ermittelt wird die austretende Masse als Funktion der Zeit.

In einer bevorzugten Ausführungsform, wie für Niedertemperatur-expandierende Formulierungen, weisen die Polymere a) einen Schmelzpunkt (bestimmbar mittels DSC nach ASTM D3417) unterhalb der Zersetzungstemperatur des endothermen Treibmittels auf. Bevorzugt weist das Polymer a) einen Schmelzpunkt unterhalb von 100 °C, bevorzugt zwischen 90 und 60 °C auf.

Die thermisch expandierbaren Zubereitungen enthalten vorzugsweise mindestens 30 Gew.-% und bevorzugt maximal 85 Gew.-%, insbesondere maximal 70 Gew.-% mindestens eines peroxidisch vernetzbaren Polymers a). Thermisch expandierbare Zubereitungen, die 30 bis 85 Gew.-%, insbesondere 40 bis 75 Gew.-%, bevorzugt 45 bis 65 Gew.-% mindestens eines peroxidisch vernetzbaren Polymers a), jeweils bezogen auf die Gesamtmasse der thermisch expandierbaren Zubereitung enthalten, sind besonders bevorzugt.

Die thermisch expandierbaren Zubereitungen enthalten vorzugsweise mindestens 30 Gew.-% und bevorzugt maximal 85 Gew.-%, insbesondere maximal 70 Gew.-% mindestens eines Ethylen-Vinylacetat-Copolymers. Thermisch expandierbare Zubereitungen, die 30 bis 85 Gew.-%, insbesondere 40 bis 75 Gew.-%, bevorzugt 45 bis 65 Gew.-% mindestens eines Ethylen-Vinylacetat-Copolymers, jeweils bezogen auf die Gesamtmasse der thermisch expandierbaren Zubereitung enthalten, sind besonders bevorzugt.

In verschiedenen Ausführungsformen wird als Polymer a) eine Mischung von mindestens zwei Polymeren eingesetzt, wobei das erste Polymer nicht Glycidyl(meth)acrylat als Monomer einpolymerisiert enthält und vorzugsweise aus den vorstehend beschriebenen ausgewählt wird, und das zweite Polymer Glycidyl(meth)acrylat als Monomer einpolymerisiert enthält. Der Ausdruck "(Meth)acrylat", wie hierin verwendet, umfasst jeweils die entsprechenden Acrylate und Methacrylate. In verschiedenen Ausführungsformen enthalten die thermisch expandierbaren Zusammensetzungen mindestens ein zweites peroxidisch vernetzbares Polymer, welches zu einem Anteil von 2 bis 25 Gew.-%, bezogen auf das jeweilige Polymer, Glycidyl(meth)acrylat als Monomer einpolymerisiert enthält. Der Glycidyl(meth)acrylat-Anteil an diesem Polymer beträgt bevorzugt 2 bis 20 Gew.-%, insbesondere 3 bis 15 Gew.-%, bevorzugt 6 bis 10 Gew.-%, bezogen auf die Gesamtmasse der Copolymere. Bevorzugt enthalten diese Polymere Glycidylmethacrylat. Als solche Polymere eignen sich die oben beschriebenen peroxidisch vernetzbaren Polymere, wobei die Polymere Glycidyl(meth)acrylat als Einheit enthalten. Besonders bevorzugt sind Terpolymere, die neben Glycidyl(meth)acrylat als Einheit bevorzugt Monomere ausgewählt aus der Gruppe von Ethylen, Propylen, Acrylsäureester, wie bevorzugt Methyl(meth)acrylat, Ethyl(meth)acrylat, Propyl(meth)acrylat oder Butyl(meth)acrylat, Styrol und Vinylacetat enthalten. Ganz besonders bevorzugt sind Ethylen/(Meth)Acrylsäureester/Glycidyl(meth)acrylat-Terpolymere, insbesondere Ethylen/Methyl(meth)acrylat/Glycidylmethacrylat und Ethylen/Butyl(meth)acrylat/Glycidyl-methacrylat. Weiterhin hat es sich als vorteilhaft erwiesen, wenn der Schmelzindex dieses Polymers, insbesondere des Terpolymers, von 0,3 bis 400 g/10min, insbesondere von 0,5 bis 45 g/10min ist. Polymere, insbesondere Terpolymere, mit einem Schmelzindex von 1,5 bis 25 g/10min, insbesondere von 2 bis 15 g/10 min, sind besonders vorteilhaft.

In einer bevorzugten Ausführungsform, wie für Niedertemperatur-expandierende Formulierungen, weisen diese Polymere, die Glycidyl(meth)acrylat-Monomere einpolymerisiert enthalten, einen Schmelzpunkt (bestimmbar mittels DSC nach ASTM D3417) unterhalb der Zersetzungstemperatur des endothermen Treibmittels auf. Bevorzugt weist das Polymer einen Schmelzpunkt unterhalb von 100 °C, bevorzugt zwischen 90 und 60 °C, bevorzugt zwischen 80 und 65 °C auf.

Es kann erfindungsgemäß vorteilhaft sein, wenn zwei oder mehrere, insbesondere zwei verschiedene Polymere, die Glycidyl(meth)acrylat-Monomere einpolymerisiert enthalten, in den thermisch expandierbaren Zubereitungen eingesetzt werden. Vor allem für die Verbesserung der geringen Wasserabsorption sind zwei verschiedene Terpolymere von Vorteil. Bevorzugt sind ein Ethylen/Methyl(meth)acrylat/Glycidylmethacrylat und ein Ethylen/Butyl(meth)acrylat/Glycidylmethacrylat enthalten.

Die thermisch expandierbaren Zubereitungen können in solchen Ausführungsformen vorzugsweise mindestens 2 Gew.-% und bevorzugt maximal 40 Gew.-%, insbesondere maximal 20 Gew.-% mindestens eines Polymers, welches zu einem Anteil von 2 bis 25 Gew.-%, insbesondere 3 bis 20 Gew.-%, bezogen auf das jeweilige Polymer, Glycidyl(meth)acrylat als Monomer einpolymerisiert enthält, insbesondere mindestens eines Terpolymers, enthalten. Thermisch expandierbare Zubereitungen, die 2 bis 40 Gew.-%, insbesondere 5 bis 30 Gew.-%, bevorzugt 7,5 bis 22,5 Gew.-% mindestens eines peroxidisch vernetzbaren Polymers, das Glycidyl(meth)acrylat als Monomer einpolymerisiert enthält, jeweils bezogen auf die Gesamtmasse der thermisch expandierbaren Zubereitung enthalten, sind besonders bevorzugt. Dabei können die Zubereitungen zusätzlich mindestens ein Ethylen-Vinylacetat-Copolymer in den oben angegeben Mengen enthalten.

Als weiterer Bestandteil kann die thermisch expandierbare Zusammensetzung mindestens ein klebrigmachendes Harz enthalten. Insbesondere wird mindestens ein klebrigmachendes Harz in Kombination mit vorherbeschriebenen Polymeren, die Glycidyl(meth)acrylat-Monomere einpolymerisiert enthalten, eingesetzt. Das Harz bewirkt, dass die Klebrigkeit der nicht expandierten Zusammensetzung erhöht wird. Dies ist vor allem bei einer manuellen Applikation von Vorteil und kann zudem auch die Haftung insgesamt verbessern. Es handelt sich dabei insbesondere um Harze, die einen Erweichungspunkt von kleiner 130 °C (gemessen nach der sogenannten Ring-Ball-Methode gemäß DIN 52011) aufweisen, insbesondere von kleiner 100 °C, bevorzugt von kleiner 50°C. Vorteilhaft weißt das Harz einen Erweichungspunkt von -20 bis 130 °C, insbesondere 0 bis 50°C auf. Bevorzugt wird mindestens ein bei Raumtemperatur flüssiges klebrigmachendes Harz verwendet.

Geeignet sind beispielsweise: Rosinester-Harze basierend auf natürlichen Rohstoffen, d.h. sogenannte "gum rosins", ganz oder teil-hydrierte Rosinester-Harze, maleinisierte Derivate dieser Rosinesterharze, disproportionierte Derivate, modifizierte Naturharze wie Harzsäuren aus Balsamharz, Tallharz oder Wurzelharz, z.B. vollverseiftes Balsamharz, ggf. modifizierte Terpen-Harze, insbesondere Terpen-Co- oder Terpolymere wie Styrol-Terpene, alpha-Methyl-Styrol-Terpene, Phenol-modifizierte Terpen-Harze sowie hydrierte Derivate davon, sonstige Styrol-Harze, sonstige ggf. Phenol-modifizierte alpha-Methyl-Styrol-Harze, Acrylsäure-Copolymerisate, vorzugsweise Styrol-Acrylsäure-Copolymere, und aromatische, aliphatische oder cycloaliphatische Kohlenwasserstoffharze, insbesondere vom Typ C5, C9, C9/C10, sowie deren modifizierte oder hydrierte Derivate. Bevorzugt wird mindestens ein aromatisches, aliphatisches oder cycloaliphatisches Kohlenwasserstoff-Harz, insbesondere vom Typ C5, C9, C9/C10, sowie modifizierte oder hydrierte Derivate davon verwendet, insbesondere mindestens ein aromatisches Kohlenwasserstoff-Harz, bevorzugt ein flüssiges C9/C10 aromatisches Kohlenwasserstoff-Harz.

Die klebrigmachenden Harze werden bevorzugt in einer Menge von 5 bis 70 Gew.-%, bevorzugt von 20 bis 60 Gew.-%, besonders bevorzugt von 30 bis 50 Gew.-% eingesetzt, jeweils bezogen auf die Gesamtmenge der thermisch expandierbaren Zusammensetzung. Die thermisch expandierbaren Zubereitungen können in solchen Ausführungsformen mit einem klebrigmachenden Harz vorzugsweise mindestens 2 Gew.-% und bevorzugt maximal 40 Gew.-%, insbesondere maximal 20 Gew.-% mindestens eines Polymers, welches zu einem Anteil von 2 bis 25 Gew.-%, insbesondere 3 bis 20 Gew.-%, bezogen auf das jeweilige Polymer, Glycidyl(meth)acrylat als Monomer einpolymerisiert enthält, insbesondere mindestens eines Terpolymers, enthalten. Thermisch expandierbare Zubereitungen, die 2 bis 40 Gew.-%, insbesondere 5 bis 30 Gew.-%, bevorzugt 7,5 bis 22,5 Gew.-% mindestens eines peroxidisch vernetzbaren Polymers, das Glycidyl(meth)acrylat als Monomer einpolymerisiert enthält, jeweils bezogen auf die Gesamtmasse der thermisch expandierbaren Zubereitung enthalten, sind besonders bevorzugt.

Als weiterer Bestandteil neben den vorstehend beschriebenen peroxidisch vernetzbaren Polymeren können die thermisch expandierbaren Zubereitungen vorzugsweise mindestens ein niedermolekulares multifunktionelles Acrylat enthalten.

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen.

Bevorzugte difunktionelle Acrylate sind Ethylenglycol-Dimethacrylat, Diethylenglycol-Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol-Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Di-pentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Neben den niedermolekularen Acrylaten können die thermisch expandierbaren Zubereitungen weitere Covernetzer, wie beispielsweise Allylverbindungen, wie Triallyl-cyanurat, Triallylisocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enhalten.

Dabei hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die Co-Vernetzer, bevorzugt die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen mindestens ein Peroxid. Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide), 4,4- Ditert-butylperoxy-n-butyl-valerate und Trioxepane (z.B. 3,3,5,7,7-Pentamethyl-1,2,4-trioxepan).

Besonders bevorzugt sind die beispielsweise kommerziell von der Firma Akzo Nobel bzw. Pergan vertriebenen Peroxide, wie 3,3,5,7,7-Pentamethyl-1,2,4-trioxepan, 2,5-Dimethyl-2,5-di(tert.-butylperoxy)hexan, Di-tert.-butylperoxid, 2,5-Dimethyl-2,5-di(tert.-butylperoxy)hexan, tert.-Butylcumylperoxid, Di-(2-tert.-butylperoxyisopropyl)benzol, Dicumylperoxid, Butyl-4,4-di(tert.-butylperoxi)valerat, tert-Butylperoxy-2-ethylhexylcarbonat, 1,1-Di-(tert.-butylperoxy)-3,3,5-trimethylcyclohexan, tert.-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C, insbesondere 130°C eine Halbwertszeit von mindestens 60 Minuten aufweisen.

Besonders bevorzugt ist mindestens ein Peroxid ausgewählt aus der Gruppe aus Di(tert.-butylperoxyisopropyl)benzol, Dicumylperoxid, 1,1-Di-(tert.-butylperoxy)-3,3,5-trimethylcyclohexan, 2,5-Dimethyl-2,5-di(tert.-butylperoxy)hexan, Dibenzoylperoxid und Di-tert.-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Das mindestens eine oder die Peroxide sind in den erfindungsgemäßen thermisch expandierbaren Zubereitungen vorzugsweise in einer Menge von 0,05 bis 4 Gew.-%, bevorzugt in einer Menge von 0,05 bis 2 Gew.-%, insbesondere in einer Menge von 0,1 bis 1 Gew.-%, jeweils bestimmt als Aktivsubstanzgehalt an Peroxid bezogen auf die Gesamtmasse der thermisch expandierbaren Zubereitung, enthalten.

Neben den oben genannten Bestandteilen können die thermisch expandierbaren Massen noch weitere übliche Komponenten, wie beispielsweise Füllstoffe, Weichmacher, Reaktivverdünner, Rheologie-Hilfsmittel, Netzmittel, Haftvermittler, Harze, Alterungsschutzmittel, Stabilisatoren und/oder Farbpigmente enthalten.

Beispiele für geeignete Weichmacher sind Alkylester zweibasiger Säuren (z. B. Phthalat-Ester, Adipinsäurepolyester), technische Weiß- und Prozessöle (Paraffine), Diarylether, Benzoate von Polyalkylenglykolen, Citronensäureester (z.B. Citronensäuretriethylester), organische Phosphate und Alkylsulfonsäureester von Phenol oder Kresol.

Als Füllstoffe kommen beispielsweise die diversen gemahlenen oder gefällten Kreiden, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff. Bevorzugt sind die Füllstoffe beschichtet, vorzugsweise mit Stearinsäure oder Stearaten. Dadurch wird das Rieselverhalten positiv beeinflusst.

Die Füllstoffe werden vorzugsweise in einer Menge von 0 bis 60 Gew.-%, insbesondere von 0 bis 15 Gew.-%, bevorzugt 2 bis 10 Gew.-%, besonders bevorzugt 3 bis 8 Gew.-% jeweils bezogen auf die Masse der gesamten thermisch expandierbaren Zusammensetzung eingesetzt.

Farbgebende Komponenten, insbesondere schwarze Farbstoffe auf Basis von Graphit und/oder Ruß, sind in den erfindungsgemäßen thermisch expandierbaren Zusammensetzungen vorzugsweise in einer Menge von 0 bis 2 Gew.-%, insbesondere von 0,1 bis 0,8 Gew.-%, ganz besonders bevorzugt 0,15 bis 0,5 Gew.-%, jeweils bezogen auf die Masse der gesamten thermisch expandierbaren Zusammensetzung enthalten.

Als Antioxidantien oder Stabilisatoren können beispielsweise sterisch gehinderte Phenole bzw. Mischungen davon und/oder sterisch gehinderte Thioether und/oder sterisch gehinderte aromatische Amine, Diphosphonite, Disulfide eingesetzt werden, wie beispielsweise Bis-(3,3-bis-(4'-hydroxy-3-tert. butylphenyl) butansäure)-glykolester oder auch 4-Methylphenol, Reaktionsprodukt mit Dicyclopentadien und Isobutylen .

Antioxidantien oder Stabilisatoren sind in den erfindungsgemäßen thermisch expandierbaren Zusammensetzungen vorzugsweise in einer Menge von 0 bis 5 Gew.-%, insbesondere von 0,1 bis 2 Gew.-%, bevorzugt von 0,1 bis 0,5 Gew.-%, jeweils bezogen auf die Masse der gesamten thermisch expandierbaren Zusammensetzung enthalten.

Trockenmittel wie Calciumoxid und/oder Zeolithe sind in den erfindungsgemäßen thermisch expandierbaren Zusammensetzungen vorzugsweise in einer Menge von 0 - 5 Gew.-%, insbesondere von 0,1 bis 2,5 Gew.-%, jeweils bezogen auf die Masse der gesamten thermisch expandierbaren Zusammensetzung enthalten.

Ein bevorzugter Gegenstand der vorliegenden Erfindung sind thermisch expandierbare Zusammensetzungen, enthaltend

    a) 30 bis 85 Gew.-% mindestens eines peroxidisch vernetzendes Polymers,
    b) 0,05 bis 4 Gew.-% mindestens eines Peroxids und
    c) 0,1 bis 40 Gew.-% mindestens eines endothermen chemischen Treibmittels,

dadurch gekennzeichnet, dass das mindestens eine endotherme chemische Treibmittel mindestens eine feste, optional funktionalisierte, Polycarbonsäure oder deren Salz ausgewählt aus festen, organischen Hydroxyfunktionalisierten oder ungesättigten Di-, Tri-, Tetra- oder Polycarbonsäuren oder deren Salzen, vorzugsweise zu 5 bis 35 Gew.-%, und mindestens ein Harnstoffderivat der Formel (I), vorzugsweise zu 0,02 bis 6 Gew.-%, jeweils bezogen auf die Gesamtmasse der thermisch expandierbaren Zubereitung vor der Expansion.

Ein weiterer bevorzugter Gegenstand der vorliegenden Erfindung sind thermisch expandierbare Zusammensetzungen, enthaltend

    a) 30 bis 85 Gew.-%, insbesondere 40 bis 75 Gew.-%, bevorzugt 45 bis 65 Gew.-% mindestens eines peroxidisch vernetzendes Polymers,
    b) 0,05 bis 4 Gew.-%, bevorzugt 0,05 bis 2 Gew.-%, insbesondere 0,1 bis 1 Gew.-% mindestens eines Peroxids und
    c) 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% mindestens eines endothermen chemischen Treibmittels,

dadurch gekennzeichnet, dass das mindestens eine endotherme chemische Treibmittel mindestens eine feste, optional funktionalisierte, Polycarbonsäure oder deren Salz ausgewählt aus festen, organischen Hydroxyfunktionalisierten oder ungesättigten Di-, Tri-, Tetra- oder Polycarbonsäuren oder deren Salzen, vorzugsweise zu 5 bis 35 Gew.-%, bevorzugt 10 bis 25 Gew.-%, ganz bevorzugt 15 bis 22 Gew.-%, und mindestens ein Harnstoffderivat der Formel (I), vorzugsweise zu 0,02 bis 6 Gew.-%, bevorzugt 0,02 bis 2 Gew.-%, noch bevorzugter 0,1 bis 1,5 Gew.-%, jeweils bezogen auf die Gesamtmasse der thermisch expandierbaren Zubereitung vor der Expansion.

Ein weiterer bevorzugter Gegenstand der vorliegenden Erfindung sind thermisch expandierbare Zusammensetzungen, enthaltend

    a) 30 bis 85 Gew.-%, insbesondere 40 bis 75 Gew.-%, bevorzugt 45 bis 65 Gew.-% mindestens eines mindestens eines Ethylen-Vinylacetat-Copolymers und 2 bis 40 Gew.-%, insbesondere 5 bis 30 Gew.-%, bevorzugt 7,5 bis 22,5 Gew.-% mindestens eines peroxidisch vernetzbaren Polymers, das Glycidyl(meth)acrylat als Monomer einpolymerisiert enthält,
    b) 0,05 bis 4 Gew.-%, bevorzugt 0,05 bis 2 Gew.-%, insbesondere 0,1 bis 1 Gew.-% mindestens eines Peroxids und
    c) 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% mindestens eines endothermen chemischen Treibmittels,

dadurch gekennzeichnet, dass das mindestens eine endotherme chemische Treibmittel mindestens eine feste, optional funktionalisierte, Polycarbonsäure oder deren Salz ausgewählt aus festen, organischen Hydroxyfunktionalisierten oder ungesättigten Di-, Tri-, Tetra- oder Polycarbonsäuren oder deren Salzen, vorzugsweise zu 5 bis 35 Gew.-%, bevorzugt 10 bis 25 Gew.-%, ganz bevorzugt 15 bis 22 Gew.-%, und mindestens ein Harnstoffderivat der Formel (I), vorzugsweise zu 0,02 bis 6 Gew.-%, bevorzugt 0,02 bis 2 Gew.-%, noch bevorzugter 0,1 bis 1,5 Gew.-%, jeweils bezogen auf die Gesamtmasse der thermisch expandierbaren Zubereitung vor der Expansion.

Ein weiterer bevorzugter Gegenstand der vorliegenden Erfindung, welcher sich insbesondere zur manuellen Applikation eignet, sind thermisch expandierbare Zusammensetzungen, enthaltend

a) 2 bis 40 Gew.-%, insbesondere 5 bis 30 Gew.-%, bevorzugt 7,5 bis 22,5 Gew.-% mindestens eines peroxidisch vernetzbaren Polymers, das Glycidyl(meth)acrylat als Monomer einpolymerisiert enthält, insbesondere ein Terpolymer,

b) 0,05 bis 6 Gew.-%, bevorzugt 0,1 bis 5 Gew.-%, insbesondere 1 bis 4 Gew.-% mindestens eines Peroxids und c) 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% mindestens eines endothermen chemischen Treibmittels,

d) 5 bis 70 Gew.-%, bevorzugt von 20 bis 60 Gew.-%, besonders bevorzugt von 30 bis 50 Gew.-% mindestens eines klebrigmachenden Harzes, insbesondere mindestens eines aromatischen, aliphatischen oder cycloaliphatischen Kohlenwasserstoff-Harzes, sowie modifizierte oder hydrierte Derivate davon, insbesondere mindestens eines aromatisches Kohlenwasserstoff-Harzes, bevorzugt eines flüssigen C9/C10 aromatischen Kohlenwasserstoff-Harzes,

dadurch gekennzeichnet, dass das mindestens eine endotherme chemische Treibmittel mindestens eine feste, optional funktionalisierte, Polycarbonsäure oder deren Salz ausgewählt aus festen, organischen Hydroxyfunktionalisierten oder ungesättigten Di-, Tri-, Tetra- oder Polycarbonsäuren oder deren Salzen, vorzugsweise zu 5 bis 35 Gew.-%, bevorzugt 10 bis 25 Gew.-%, ganz bevorzugt 15 bis 22 Gew.-%, und mindestens ein Harnstoffderivat der Formel (I), vorzugsweise zu 0,02 bis 6 Gew.-%, bevorzugt 0,02 bis 2 Gew.-%, noch bevorzugter 0,1 bis 1,5 Gew.-%, jeweils bezogen auf die Gesamtmasse der thermisch expandierbaren Zubereitung vor der Expansion.

Die erfindungsgemäßen thermisch expandierbaren Zusammensetzungen sind vorzugsweise derart formuliert, dass sie bei 22°C fest sind. Eine thermisch expandierbare Zusammensetzung wird erfindungsgemäß als "fest" bezeichnet, wenn die Geometrie dieser Zusammensetzung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zusammensetzungen können durch Mischung der ausgewählten Komponenten in einem beliebigen, geeigneten Mischer, wie beispielsweise einem Kneter, einem Doppel-Z-Kneter, einem Innenmischer, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung der Härter, der Beschleuniger und/oder des Treibmittels bewirken. Die resultierende thermisch expandierbare Zusammensetzung kann unmittelbar nach ihrer Herstellung in Form gebracht werden, beispielsweise durch Blasformen, Pelletierung, Spritzgussverfahren, Formpressverfahren, Stanzverfahren oder Extrusion.

Die Expansion der thermisch expandierbaren Zusammensetzung erfolgt durch Erhitzung, wobei die Zusammensetzung für eine bestimmte Zeit auf eine bestimmte Temperatur erhitzt wird, die ausreichend ist, um die Aktivierung des Treibmittels zu bewirken. In Abhängigkeit von den Bestandteilen der Zusammensetzung und den Bedingungen der Fertigungslinie liegen derartige Temperaturen üblicherweise im Bereich von 110°C bis 240°C, vorzugsweise 120°C bis 210°C, mit einer Verweilzeit von 10 bis 90 Minuten, vorzugsweise von 5 bis 60 Minuten.

Im Bereich des Fahrzeugbaus ist es besonders vorteilhaft, wenn die Expansion der erfindungsgemäßen Zusammensetzungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zusammensetzungen der vorliegenden Erfindung können in einem weiten Bereich von Stütz-, Füll-, Dichtungs- und Klebstoffapplikationen zum Einsatz kommen, beispielsweise im Bereich der Schottteile zur Abdichtung von Hohlräumen in Fahrzeugen. Aber auch ein Einsatz als Unterfütterungsklebstoff, beispielsweise im Tür oder Dachbereich ist denkbar. Für einen derartigen Einsatzzweck können die erfindungsgemäßen thermisch expandierbaren Zusammensetzungen mittels Direktextrusion appliziert werden. Die Zusammensetzungen können aber auch in extrudierter Form an den Anwendungsort gebracht werden und dort aufgepresst und/oder angeschmolzen werden. Als dritte Alternative ist auch das Aufbringen als Co-Extrudat denkbar. Bei dieser Ausführungsform wird erfindungsgemäß unter das eigentliche nicht klebrige Formteil aus der erfindungsgemäßen thermisch expandierbaren Zusammensetzung eine zweite klebrige Zusammensetzung in einer dünnen Schicht aufgebracht. Diese zweite klebrige Schicht dient im Rahmen dieser Ausführungsform dazu, das Formteil im Rohbau zu fixieren. Weiterhin kann die Zusammensetzung manuell aufgetragen werden. Insbesondere Zusammensetzungen mit einem klebrigmachenden Harz, welche eine hohe Klebrigkeit aufweisen, eignen sich für eine manuelle Applikation.

Die thermisch expandierbaren Zusammensetzungen sind dementsprechend besonders für die Herstellung von Formkörpern, insbesondere Schotteilen zur Hohlraumabdichtung geeignet, d.h. zur Herstellung von Teilen, die in die Hohlräume von Fahrzeugen eingesetzt werden, anschließend durch Erhitzung expandieren und gleichzeitig aushärten und auf diese Weise den Hohlraum möglichst vollständig abdichten.

Ein zweiter Gegenstand der vorliegenden Erfindung ist dementsprechend ein Formkörper, der eine erfindungsgemäße thermisch expandierbare Zusammensetzung aufweist. Dabei kann es sich beispielsweise um ein Schottteil zum Abdichten von Hohlräumen eines Bauteils, das eine Form aufweist, die an den Hohlraum angepasst ist, handeln.

Unter einer "Form, die an den Hohlraum angepasst ist" werden dabei erfindungsgemäß alle Geometrien von Schottteilen verstanden, die nach der Expansion eine vollständige Abdichtung des Hohlraums sicherstellen. Dabei kann die Form des Schottteils individuell der Form des Hohlraums nachempfunden sein und entsprechende Spitzen und/oder Rundungen aufweisen; im Falle der erfindungsgemäßen thermisch expandierbaren Zusammensetzungen mit hohen Expansionsgraden, kann aber auch das Einbringen einer entsprechend großen Menge in variabler Form, beispielsweise in Form einer Raupe oder eines abgelängten Strangs / Extrudats des Materials, in den Hohlraum ausreichen, um nach der Expansion eine vollständige Abdichtung des Hohlraums zu gewährleisten.

Derartige Schottteile werden aus den erfindungsgemäßen thermisch expandierbaren Zusammensetzungen üblicherweise durch Spritzgusstechniken hergestellt. Dabei werden die thermisch expandierbaren Zusammensetzungen auf Temperaturen im Bereich von 70 bis 120°C erhitzt und dann in eine entsprechend ausgebildete Form injiziert.

Die erfindungsgemäßen Formkörper können in allen Produkten zum Einsatz kommen, die Hohlräume aufweisen. Dies sind neben den Fahrzeugen beispielsweise auch Flugzeuge, Schienenfahrzeuge, Haushaltsgeräte, Möbel, Gebäude, Wände, Abtrennungen oder auch Boote.

Ein weiterer Gegenstand der vorliegenden Erfindung ist ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung der hierin beschriebenen Zusammensetzungen und Formkörper. Vorzugsweise ist das Verfahren ein Verfahren zur Abdichtung von Hohlräumen eines Bauteils, wobei ein erfindungsgemäßes Schottteil in den Hohlraum eingebracht wird und anschließend auf eine Temperatur oberhalb von 110°C erhitzt wird, so dass die thermisch expandierbare Zusammensetzung expandiert und den Hohlraum abdichtet.

Ein weiterer Gegenstand der vorliegenden Erfindung ist die Verwendung eines erfindungsgemäßen Formkörpers oder Schotteils zur akustischen Abdichtung von Hohlräumen in Bauteilen und/oder zur Abdichtung von Hohlräumen in Bauteilen gegen Wasser und/oder Feuchtigkeit.

Noch ein weiterer Gegenstand der vorliegenden Erfindung ist die Verwendung eines erfindungsgemäßen Formkörpers zum Verstärken oder Versteifen von Bauteilen, insbesondere hohlen Bauteilen.

Die nachfolgenden Beispiele sollen die Erfindung näher erläutern, wobei die Auswahl der Beispiele keine Beschränkung des Umfanges des Erfindungsgegenstandes darstellen soll. Bei den Zusammensetzungen sind alle Mengenangaben Gewichtsteile, wenn nicht anders angegeben.

Ausführungsbeispiele

Allgemeine Versuchsdurchführung / Herstellung der Formulierungen:

Zur Herstellung der erfindungsgemäßen thermisch expandierbaren Zubereitungen wurden die enthaltenen Polymere bei RT im Kneter bzw. wenn notwendig unter Erwärmung auf bis zu 150 °C mit Füllstoffen zu einem homogenen Teig verarbeitet. Nacheinander wurden dann die weiteren nicht reaktiven Komponenten wie Füllstoffe, Russ, Stabilisatoren und Weichmacher, falls vorhanden, zugegeben und weitergeknetet bis die Formulierung glatt ist.

Bei unter 70 °C wurden dann alle reaktiven Komponenten wie z.B. Beschleuniger, Peroxide, Aktivatoren und Katalysatoren, Zinkoxid, Calciumoxid und Treibmittel zugegeben und langsam untergeknetet bis der Klebstoff homogen gemischt ist. Dabei wurden die Treibmittel teilweise als Masterbatch eingesetzt.

Bestimmung der Expansion

Zur Bestimmung der Expansion wurden aus den gefertigten Platten der Beispielformulierungen Prüfkörper mit den Dimensionen ca. 20mm x 20mm x 3mm geschnitten, diese in einen Umluftofen eingeführt, dieser auf die in den Tabellen genannten Temperaturen erhitzt (Aufheizzeit ca. 7 bis 10 min) und die Prüfkörper dann für den in den Tabellen genannten Zeitraum bei dieser Temperatur belassen (Aufheizzeit inklusive). Die Expansion bei 175°C entspricht dabei den idealen Bedingungen, die im Rahmen der Aushärtung im Fahrzeugbau erzielt werden. Die Expansion bei 160°C simuliert die Unterbrandbedingungen, die Expansion bei 200°C die Überbrandbedingungen.

Das Ausmaß der Expansion [%] wurde mittels der Wasserverdrängungsmethode nach der Formel

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser

ermittelt.

Bestimmung der Wasseraufnahme

Zur Bestimmung der Wasseraufnahme wurden Prüfkörper der Dimension von ca. 20mm x 20 mm x 3 mm analog der Methode zur Bestimmung der Expansion hergestellt und im Umluftofen bei vorgegebenen Temperaturen analog der Methode zur Bestimmung der Expansion, wie in den Tabellen angegeben, expandiert und ausgehärtet. Anschließend wurden die so expandierten Prüfkörper 24 h bei Normklima (23 °C, 50 % r.F.) konditioniert; nach der Konditionierung erfolgte direkt die Massenbestimmung m.
Zur Lagerung im Wasserbad wurden die Prüfkörper in einem mit Wasser befüllten Behälter ca. 5-10 cm unter der Wasseroberfläche 24 h bei 23 °C gehalten. Nach der Entnahme wurden die Prüfkörper abgetropft, mit einem saugfähigen Tuch oberflächlich getrocknet und erneut gewogen $m_0$. Anschließend werden die Prüfkörper erneut für 24 h bei Normklima (23 °C, 50 % r.F.) gelagert und erneut gewogen $m_{24}$.
Die Berechnung der Wasseraufnahme [Gew.-%] erfolgte nach folgender Gleichung:

$$Wasseraufnahme = \frac{m_i - m}{m} \times 100$$

m: Masse des Prüfkörpers vor der Wasserlagerung im Tauchbad
$m_i$: Masse des Prüfkörpers nach der Wasserlagerung im Tauchbad nach der Zeit i.

i = 0: Messung direkt nach Entnahme
i = 24: Messung nach 24 h im Normklima (23 °C, 50 % r.F.)

**Beispielformulierung (EVA basiert, Peroxid-vernetzend)**

| Stoffbezeichnung/-gruppe (generische Namen) | Vergleichs-rezeptur 1 | Vergleichs-rezeptur 2 | Vergleichs-rezeptur 3 | Erfindungs-gemäße Rezeptur 1 | Erfindungs-gemäße Rezeptur 2 | Erfindungs-gemäße Rezeptur 3 |
|---|---|---|---|---|---|---|
| EVA-Polymer 1 | 51,70 | 51,90 | 51,70 | 51,10 | 63,35 | 63,35 |
| Terpolymer 1 | 10,00 | 10,00 | 10,00 | 10,00 | 10,00 | 10,00 |
| Terpolymer 2 | 2,00 | 2,00 | 2,00 | 2,00 | 2,00 | 2,00 |
| Zitronensäure | 17,50 | 17,50 | 21,00 | 21,00 | 17,50 | 17,50 |
| NaHCO$_3$ | 3,50 | 3,50 | - | - | - | - |
| Talkum | 5,25 | 5,25 | 5,25 | 5,25 | 5,25 | 5,25 |
| EVA Polymer 2 | 8,75 | 8,75 | 8,75 | 8,75 | - | - |
| Peroxid 1 | - | 0,20 | - | - | - | - |
| Peroxid 2 | 1,00 | 0,60 | 1,00 | 1,00 | 1,00 | 1,00 |
| Antioxidans | 0,30 | 0,30 | 0,30 | 0,30 | 0,30 | 0,30 |
| Harnstoff | - | - | - | 0,60 | 0,60 | - |

(fortgesetzt)

| Stoffbezeichnung/-gruppe (generische Namen) | Vergleichs-rezeptur 1 | Vergleichs-rezeptur 2 | Vergleichs-rezeptur 3 | Erfindungs-gemäße Rezeptur 1 | Erfindungs-gemäße Rezeptur 2 | Erfindungs-gemäße Rezeptur 3 |
|---|---|---|---|---|---|---|
| N,N-Dimethylharnstoff | - | - | - | - | - | 0,6 |
| **SUMME** | 100 | 100 | 100 | 100 | 100 | 100 |
| | | | | | | |
| Expansion | | | | | | |
| 20min, 160 °C | 511 | 527 | 168 | 849 | 679 | 825 |
| 25min, 175°C | 656 | 667 | 845 | 1174 | 921 | 947 |
| 40min, 200°C | 962 | 990 | 801 | 1093 | 1025 | 957 |
| | | | | | | |
| Schaumstruktur | Homogen, fein | Homogen, fein | Risse in der Oberfläche | Homogen, fein | Homogen, fein | Homogen, fein |
| | | | | | | |
| Wasseraufnahme 24 tauchen; direkt nach Entnahme in % | | | | | | |
| 20min, 160°C | 6,0 | 4,8 | 3,4 | 4,5 | 4,8 | 4,3 |
| 25min, 175°C | 4,5 | 4,0 | 10,5 | 4,3 | 3,6 | 4,7 |
| | | | | | | |
| Theoretisch enthaltenes Gasvolumen (% absolut) | 2520 | 2520 | 2520 | 2520 | 2100 | 2100 |
| Effektive Gasausbeute bei 175°C (% relativ) | 26 | 26 | 34 | 47 | 44 | 45 |

Eingesetzte Komponenten:

| EVA Polymer 1 | EVA, 16,5-19,5 %VA-Gehalt, Schmelzpunkt 82-90 °C, MFI 1,5-6 g/10min (190 °C, 2.16 kg)) |
|---|---|
| Terpolymer 1 | Terpolymer (GMA/EBA), reaktives Ethylen Terpolymer, 9 Gew.% Glycidylmethacrylat, 20 Gew.% Butylacrylat, Schmelzpunkt 72 °C, MFI 8 g/10min (190 °C, 2.16 kg)) |
| Terpolymer 2 | Ethylen-Acrylsäureester-Glycidylmethacrylat Terpolymer, Methylacrylatgehalt 24 Gew.%, Glycidylmethacrylatgehalt 8 Gew.%, Schmelzpunkt 65 °C, MFI 6 g/10min (190 °C, 2.16 kg) |

(fortgesetzt)

| Wenn vorhanden, als Masterbatch | Zitronensäure | Partikelgröße 10-15 μm |
| | NaHCO$_3$ | Partikelgröße 10-15 μm, |
| | Talkum | Talkum |
| | EVA Polymer 2 | EVA (17-19 % VA, Schmelzpunkt 85-89 °C, MFI ca. 1,5-4 g/10min 190 °C, 2.16 kg)) |
| Peroxid 1 | | Di-(2-tert.-butyl-peroxyisopropyl)-benzol, 95% Peroxid, 8.98% Aktivsauerstoffgehalt, Halbwertszeittemperatur 1h = 146 °C, t90 = 175 °C (Rheometer t90 ungefähr 12 min) |
| Peroxid 2 | | 2,5-Dimethyl-2,5-di-(tert.-butylperoxy)-hexan, 45% Peroxid, Pulver mit Kreide, 4 .96% Aktivsauerstoffgehalt, Halbwertszeittemperatur 1h = 147 °C, t90 = 175 °C (Rheometer t90 ungefähr 12 min) |
| Antioxidans | | Bis[3,3-bis-(4'-hydroxy-3'-tert-butylphenyl)butansäure]-glycol ester, Molekulargewicht 794 g/mol, Schmelzpunkt 167-171 °C |

Die erfindungsgemäßen Versuche zeigen, dass sich durch den Einsatz von Harnstoffderivaten und Zitronensäure homogene, feine Schäume mit einer geringen Wasserabsorption erhalten lassen. Gleichzeitig konnten die Ergebnisse hinsichtlich des Expansionsverhaltens und der Gasausbeute verbessert werden.

**TGA-Messungen**

In der folgenden Tabelle werden TGA Messungen der reinen Substanzen bzw. Mischungen gezeigt:

| | Zersetzungstemperatur (°C) | Zersetzungsgeschwindigkeit |
|---|---|---|
| Zitronensäure | 170 | Sehr langsam |
| Zitronensäure:Harnstoff (Massenverhältnis 10: 0,18) | 150 | Schnell |
| Zitronensäure:Harnstoff (Massenverhältnis 10: 0,36) | 145 | Schnell |
| Zitronensäure:Harnstoff (Massenverhältnis 10: 0,70) | 135 | Schnell |
| Zitronensäure:Bicarbonat (Massenverhältnis 5: 1) | 156 | Langsam |

Diese Versuche zeigen, dass sich durch den Einsatz von Harnstoffderivaten und Zitronensäure gegenüber der Verwendung von Zitronensäure allein die Zersetzungstemperatur deutlich absenken lässt (in den Versuchen bis zu 35 °C) und bereits bei vergleichbar geringen Mengen eine deutlich stärkere Absenkung der Zersetzungstemperatur zeigt, als beim Einsatz von Hydrogencarbonat. Gleichzeitig wird die Zersetzungsgeschwindigkeit gegenüber beiden Referenzen deutlich erhöht.

Ausführunqsbeispiel 4, insbesondere für manuelle Applikation

Wie die vorherigen Ausführungsbeispiele wurden zur Herstellung der erfindungsgemäßen thermisch expandierbaren Zubereitung 4 die enthaltenen Polymere bei RT im Kneter bzw. wenn notwendig unter Erwärmung auf bis zu 150 °C mit Füllstoffen zu einem homogenen Teig verarbeitet. Nacheinander wurden dann die weiteren nicht reaktiven Komponenten wie Füllstoffe, Russ, Stabilisatoren und Weichmacher, falls vorhanden, zugegeben und weitergeknetet bis die Formulierung glatt ist. Bei unter 70 °C wurden dann alle reaktiven Komponenten wie z.B. Beschleuniger, Peroxide, Aktivatoren und Katalysatoren, Zinkoxid, Calciumoxid und Treibmittel zugegeben und langsam untergeknetet bis der Klebstoff homogen gemischt ist. Dafür wurden 12,5 Teile eines Ethylen-Acrylsäureester- Glycidylmethacrylat Terpolymers (Methylacrylatgehalt 24 Gew.%, Glycidylmethacrylatgehalt 8 Gew.%, Schmelzpunkt 60 °C, MFI 6 g/10min (190 °C, 2.16 kg)), 3,2 Teile Russ, 8,3 Teile eines vorvernetzten Butylkautschuks, 45,5 Teile eines bei Raumtemperatur flüssigen aromatischen C9/C10 Kohlenwasserstoffharzes, 2,3 Teile Zinkoxid, 0,6 Teile Harnstoff, 16 Teile Zitronensäure, 3 Teile Dicumylperoxid, 3 Teile TMPTMA, 0,3 Teile Antioxidans und 5,3 Teile Polyisobutylen verwendet.

Die erhaltende thermisch expandierbare Zusammensetzung war bei Raumtemperatur flexible, klebrig und standfest. Zudem eignet sich diese Zusammensetzung hervorragend für eine manuelle Applikation. Nach dem Schäumen bei 175°C für 25 Minuten wird ein feiner homogener Schaum erhalten, der eine geringe Wasseraufnahme zeigt. Der erhaltene Schaum weist eine besonders gute Haftung auf unterschiedlichsten Materialen auf.

**Patentansprüche**

1. Thermisch expandierbare Zusammensetzung, enthaltend

   a) mindestens ein peroxidisch vernetzendes Polymer,
   b) mindestens ein Peroxid und
   c) mindestens ein endothermes chemisches Treibmittel,

   **dadurch gekennzeichnet, dass** das mindestens eine endotherme chemische Treibmittel mindestens eine feste, optional funktionalisierte, Polycarbonsäure oder deren Salz ausgewählt aus festen, organischen Hydroxy-funktionalisierten oder ungesättigten Di-, Tri-, Tetra- oder Polycarbonsäuren oder deren Salzen und mindestens ein Harnstoffderivat der Formel (I)

$$R_1\text{-NH-C(=X)-NR}_2R_3 \qquad \text{(I)}$$

   umfasst, wobei X für O oder S steht, und wobei $R_1$, $R_2$ und $R_3$ unabhängig für H, substituiertes oder unsubstituiertes Alkyl, substituiertes oder unsubstituiertes Heteroalkyl, substituiertes oder unsubstituiertes Cycloalkyl, substituiertes oder unsubstituiertes Aryl oder -C(O)-$R_4$ stehen, wobei $R_4$ für H, substituiertes oder unsubstituiertes Alkyl steht.

2. Thermisch expandierbare Zusammensetzung nach Anspruch 1, **dadurch gekennzeichnet, dass** mindestens ein peroxidisch vernetzendes Polymer a) ausgewählt wird aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymeren, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexylacrylat-Copolymeren, Ethylen-Acrylester-Copolymeren und Polyolefinen, insbesondere aus Ethylen-Vinylacteat-Copolymeren und funktionalisierten Ethylen-Vinylacetat-Copolymeren.

3. Thermisch expandierbare Zusammensetzung nach Anspruch 1 oder 2, **dadurch gekennzeichnet, dass** die mindestens eine feste, optional funktionalisierte, Polycarbonsäure oder deren Salz ausgewählt wird aus Citronensäure, Weinsäure, Äpfelsäure, Fumarsäure, Maleinsäure und deren Salzen, insbesondere Citronensäure und deren Salzen.

4. Thermisch expandierbare Zusammensetzung nach einem der Ansprüche 1 bis 3, **dadurch gekennzeichnet, dass** in den Harnstoffderivaten der Formel (I)

   (i) X für O steht; und/oder
   (ii) $R_2$ und $R_3$ ausgewählt werden aus H und unsubstituierten Alkylresten, insbesondere $C_{1-4}$ Alkylresten; und/oder
   (iii) $R_1$ ausgewählt wird aus H, unsubstituierten Alkylresten, insbesondere $C_{1-4}$ Alkyresten, substituierten oder unsubstituierten Arylresten, insbesondere substituierten oder unsubstituierten Phenylresten.

5. Thermisch expandierbare Zusammensetzung nach einem der Ansprüche 1 bis 4, **dadurch gekennzeichnet, dass** das Harnstoffderivat ein Bisharnstoffderivat der Formel (II) ist

$$H_2C(\text{-Phenyl-NH-C(=X)-NR}_2R_3)_2 \qquad \text{(II)}$$

   wobei X, $R_2$ und $R_3$ wie oben definiert sind.

6. Thermisch expandierbare Zusammensetzung nach einem der Ansprüche 1 bis 4, **dadurch gekennzeichnet, dass** das Harnstoffderivat ausgewählt wird aus: Harnstoff, N,N-Dimethyl urea, N,N-Diethyl urea, N,N'-Dimethyl urea, N,N'-Diethyl urea, 4-Chlorophenyl-N,N-dimethyl urea, 4,4'-Methylen-bis-(phenyldimethyl urea), 1,1-Dimethyl-3-(3,4-dichlorophenyl)urea, Isophorone bis(dimethyl urea), 1,1-Dimethyl-3-phenyl urea, 1,1-Dimethyl-3-(4-ethoxyphenyl)urea, 1,1'-(4-Phenylene)-bis-(3,3-dimethyl urea), 1,1-Dimethyl-3-(2-hydroxyphenyl)urea und 1,1-Dimethyl-3-(3-chloro-4-methylphenyl)urea, insbesondere aus Harnstoff, N,N-Dimethyl urea, N,N-Diethyl urea, N,N'-Dimethyl urea und N,N'-Diethyl urea.

7. Thermisch expandierbare Zusammensetzung nach einem der Ansprüche 1 bis 6, **dadurch gekennzeichnet, dass** das die Zusammensetzung mindestens ein klebrigmachendes Harz enthält, insbesondere mindestens ein aromatisches, aliphatisches oder cycloaliphatisches Kohlenwasserstoff-Harz, sowie modifizierte oder hydrierte Derivate davon, insbesondere mindestens ein aromatisches Kohlenwasserstoff-Harz.

8. Formkörper, **dadurch gekennzeichnet, dass** der Formkörper eine thermisch expandierbare Zusammensetzung nach einem der Ansprüche 1 bis 7 aufweist.

9. Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung einer thermisch expandierbaren Zusammensetzung nach einem der Ansprüche 1 bis 7 oder einem Formkörper nach Anspruch 8.

10. Verfahren nach Anspruch 9 zum Abdichten und Füllen von Hohlräumen in Bauteilen, zum Verstärken oder Versteifen von Bauteilen, **dadurch gekennzeichnet, dass** ein Formkörper nach Anspruch 8 in ein Bauteil, insbesondere den Hohlraum eines Bauteils, eingebracht wird und anschließend auf eine Temperatur oberhalb von 110°C erhitzt wird, so dass die thermisch expandierbare Zusammensetzung expandiert und das Bauteil abdichtet, füllt, verstärkt oder versteift.

11. Verwendung eines Formkörpers nach Anspruch 8 zur akustischen Abdichtung von Hohlräumen in Bauteilen und/oder zur Abdichtung von Hohlräumen in Bauteilen gegen Wasser und/oder Feuchtigkeit oder zum Verstärken oder Versteifen von Bauteilen, insbesondere hohlen Bauteilen.

**Claims**

1. A thermally expandable composition, containing

   a) at least one peroxidically crosslinking polymer,
   b) at least one peroxide and
   c) at least one endothermic chemical blowing agent,

   **characterized in that** the at least one endothermic chemical blowing agent comprises at least one solid, optionally functionalized, polycarboxylic acid or the salt thereof selected from solid, organic hydroxy-functionalized or unsaturated di-, tri-, tetra- or polycarboxylic acids or the salts thereof and at least one urea derivative of formula (I)

   $$R_1\text{-}NH\text{-}C(=X)\text{-}NR_2R_3 \qquad (I)$$

   where X represents O or S, and where $R_1$, $R_2$ and $R_3$ independently represent H, substituted or unsubstituted alkyl, substituted or unsubstituted heteroalkyl, substituted or unsubstituted cycloalkyl, substituted or unsubstituted aryl, or -C(O)-$R_4$, where $R_4$ represents H, or substituted or unsubstituted alkyl.

2. The thermally expandable composition according to claim 1, **characterized in that** at least one peroxidically crosslinking polymer a) is selected from styrene-butadiene block copolymers, styrene-isoprene block copolymers, ethylene-vinyl acetate copolymers, functionalized ethylene-vinyl acetate copolymers, functionalized ethylene-butyl acrylate copolymers, ethylene-propylene-diene copolymers, ethylene-methyl acrylate copolymers, ethylene-ethyl acrylate copolymers, ethylene-butyl acrylate copolymers, ethylene (meth)acrylic acid copolymers, ethylene-2-ethylhexyl acrylate copolymers, ethylene-acrylic ester copolymers and polyolefins, in particular from ethylene-vinyl acetate copolymers and functionalized ethylene-vinyl acetate copolymers.

3. The thermally expandable composition according to claim 1 or 2, **characterized in that** the at least one solid, optionally functionalized, polycarboxylic acid or the salt thereof is selected from citric acid, tartaric acid, malic acid, fumaric acid, maleic acid and the salts thereof, in particular citric acid and the salts thereof.

**4.** The thermally expandable composition according to one of claims 1 to 3, **characterized in that**, in the urea derivative of formula (I),

(i) X represents O; and/or
(ii) $R_2$ and $R_3$ are selected from H and unsubstituted alkyl functional groups, in particular $C_{1-4}$ alkyl functional groups; and/or
(iii) $R_1$ is selected from H, unsubstituted alkyl functional groups, in particular $C_{1-4}$ alkyl functional groups, substituted or unsubstituted aryl functional groups, in particular substituted or unsubstituted phenyl functional groups.

**5.** The thermally expandable composition according to one of claims 1 to 4, **characterized in that** the urea derivative is a biurea derivative of formula (II)

$$H_2C(\text{-phenyl-NH-C(=X)-}NR_2R_3)_2 \qquad (II)$$

where X, $R_2$ and $R_3$ are defined as above.

**6.** The thermally expandable composition according to one of claims 1 to 4, **characterized in that** the urea derivative is selected from: urea, N,N-dimethylurea, N,N-diethylurea, N,N'-dimethylurea, N,N'-diethylurea, 4-chlorophenyl-N,N-dimethylurea, 4,4'-methylene-bis-(phenyldimethylurea), 1,1-dimethyl-3-(3,4-dichlorophenyl)urea, isophorone bis(dimethylurea), 1,1-dimethyl-3-phenylurea, 1,1-dimethyl-3-(4-ethoxyphenyl)urea, 1,1'-(4-phenylene)-bis-(3,3-dimethylurea), 1,1-dimethyl-3-(2-hydroxyphenyl)urea and 1,1-dimethyl-3-(3-chloro-4-methylphenyl)urea, in particular from urea, N,N-dimethylurea, N,N-diethylurea, N,N'-dimethylurea and N,N'-diethylurea.

**7.** The thermally expandable composition according to one of claims 1 to 6, **characterized in that** the composition contains at least one tackifying resin, in particular at least one aromatic, aliphatic or cycloaliphatic hydrocarbon resin, and modified or hydrogenated derivatives thereof, in particular at least one aromatic hydrocarbon resin.

**8.** A shaped body, **characterized in that** the shaped body has a thermally expandable composition according to one of claims 1 to 7.

**9.** A method for sealing and filling cavities in components, for strengthening or stiffening components, in particular hollow components, and for bonding movable components, using a thermally expandable composition according to one of claims 1 to 7 or a shaped body according to claim 8.

**10.** The method according to claim 9 for sealing and filling cavities in components and for strengthening or stiffening components, **characterized in that** a shaped body according to claim 8 is inserted into a component, in particular the cavity in a component, and is then heated to a temperature above 110 °C, such that the thermally expandable composition expands, and seals, fills, strengthens or stiffens the component.

**11.** The use of a shaped body according to claim 8 for acoustically sealing cavities in components and/or for sealing cavities in components against water and/or moisture, or for strengthening or stiffening components, in particular hollow components.


**Revendications**

**1.** Composition thermo-expansible contenant

a) au moins un polymère à réticulation peroxydique,
b) au moins un peroxyde et
c) au moins un agent d'expansion chimique endothermique,

**caractérisée en ce que** l'au moins un agent d'expansion chimique endothermique comprend au moins un acide polycarboxylique solide éventuellement fonctionnalisé ou son sel, choisi parmi les acides di-, tri-, tétra- ou polycarboxyliques solides organiques à fonctionnalité hydroxy ou insaturés, ou leurs sels, et au moins un dérivé d'urée de formule (I)

$$R_1\text{-NH-C(=X)-}NR_2R_3 \qquad (I)$$

dans laquelle X représente O ou S, et $R_1$, $R_2$ et $R_3$ représentent indépendamment H, un alkyle substitué ou non substitué, un hétéroalkyle substitué ou non substitué, un cycloalkyle substitué ou non substitué, un aryle substitué ou non substitué ou -C(O)-$R_4$, et $R_4$ représente H, ou un alkyle substitué ou non substitué.

2. Composition thermiquement expansible selon la revendication 1, **caractérisée en ce qu'**au moins un polymère à réticulation peroxydique a) est choisi parmi les copolymères blocs styrène-butadiène, les copolymères blocs styrène-isoprène, les copolymères d'éthylène-acétate de vinyle, les copolymères fonctionnalisés d'éthylène-acétate de vinyle, les copolymères fonctionnalisés d'éthylène-acrylate de butyle, les copolymères d'éthylène-propylène-diène, les copolymères d'éthylène-acrylate de méthyle, les copolymères d'éthylène-acrylate d'éthyle, les copolymères d'éthylène-acrylate de butyle, les copolymères d'éthylène (méth)acrylique, les copolymères d'éthylène-2-éthylhexyle acrylate, les copolymères et polyoléfines d'éthylène-ester acrylique, en particulier parmi les copolymères d'éthylène-acétate de vinyle et les copolymères fonctionnalisés d'éthylène-acétate de vinyle.

3. Composition thermo-expansible selon la revendication 1 ou 2, **caractérisée en ce que** l'au moins un acide polycarboxylique solide éventuellement fonctionnalisé ou son sel, est choisi parmi l'acide citrique, l'acide tartrique, l'acide malique, l'acide fumarique, l'acide maléique et leurs sels, en particulier l'acide citrique et ses sels.

4. Composition thermo-expansible selon l'une des revendications 1 à 3, **caractérisée en ce que**, dans les dérivés d'urée de formule (I),

(i) X représente O ; et/ou
(ii) $R_2$ et $R_3$ sont choisis parmi H et des radicaux alkyle non substitués, en particulier des radicaux alkyle en $C_{1-4}$ ; et/ou
(iii) $R_1$ est choisi parmi H, des radicaux alkyle non substitués, en particulier des radicaux alkyle en $C_{1-4}$, des radicaux aryle substitués ou non substitués, en particulier des radicaux phényle substitués ou non substitués.

5. Composition thermo-expansible selon l'une des revendications 1 à 4, **caractérisée en ce que** le dérivé d'urée est un dérivé bis-urée de formule (II)

$$H_2C(\text{-Phenyl-NH-C(=X)-}NR_2R_3)_2 \qquad \text{(II)}$$

dans laquelle X, $R_2$ et $R_3$ sont définis comme ci-dessus.

6. Composition thermo-expansible selon l'une des revendications 1 à 4, **caractérisée en ce que** le dérivé d'urée est choisi parmi : l'urée, la N,N-diméthylurée, la N,N-diéthylurée, la N,N'-diméthylurée, la N,N'-diéthylurée, la 4-chlorophényl-N,N-diméthylurée, la 4,4'-méthylène-bis-(phényldiméthylurée), la 1,1-diméthyl-3-(3,4-dichlorophényl)urée, l'isophorone bis(diméthylurée), la 1,1-diméthyl-3-phénylurée, la 1,1-diméthyl-3-(4-éthoxyphényl)urée, la 1,1'-(4-phénylène)-bis-(3,3-diméthylurée), la 1,1-diméthyl-3-(2-hydroxyphényl)urée et la 1,1-diméthyl-3-(3-chloro-4-méthylphényl)urée, en particulier parmi l'urée, la N,N-diméthylurée, la N,N-diéthylurée, la N,N'-diméthylurée et la N,N'-diéthylurée.

7. Composition thermo-expansible selon l'une des revendications 1 à 6, **caractérisée en ce que** la composition contient au moins une résine collante, en particulier au moins une résine hydrocarbonée aromatique, aliphatique ou cycloaliphatique, et ses dérivés modifiés ou hydrogénés, en particulier au moins une résine hydrocarbonée aromatique.

8. Corps façonné, **caractérisé en ce qu'**il présente une composition thermo-expansible selon l'une des revendications 1 à 7.

9. Procédé permettant de rendre étanches et de remplir des cavités dans des composants, de renforcer ou de rigidifier des composants, en particulier des composants creux, et de coller des composants mobiles en utilisant une composition thermo-expansible selon l'une des revendications 1 à 7 ou un corps façonné selon la revendication 8.

10. Procédé selon la revendication 9, permettant de rendre étanches et de remplir des cavités dans des composants, de renforcer ou de rigidifier des composants, **caractérisé en ce qu'**un corps façonné selon la revendication 8 est introduit dans un composant, en particulier dans la cavité d'un composant, puis est chauffé à une température supérieure à 110 °C, de telle sorte que la composition thermo-expansible se dilate et rend étanche, remplit, renforce ou rigidifie le composant.

11. Utilisation d'un corps façonné selon la revendication 8 pour rendre acoustiquement étanches des cavités dans des composants et/ou pour rendre étanches à l'eau et/ou à l'humidité des cavités dans des composants, ou pour renforcer ou rigidifier des composants, en particulier des composants creux.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034755 A
- WO 2007039309 A
- WO 2013017536 A
- WO 2015140282 A
- DE 102012221192